# EUROPEAN PATENT APPLICATION

(11) **EP 2 556 981 A2**
(43) Date of publication of application: **13.02.2013**
(21) Application number: 12180337.3
(22) Date of filing: 13.08.2012
(51) Int. Cl.: B60L 3/06, B60L 11/00, B60L 3/00

(54) **discharge device and discharge method to actively discharge a capacitor used in the electric power system of an electric drive vehicle**

(30) Priority: 12.08.2011 IT TO20110767
(71) Applicant: Magneti Marelli S.p.A., Corbetta (MI) (IT)
(72) Inventor: Viancino, Riccardo, 10128 Torino (IT); Bernadi, Fabio, 10060 Osasco (IT); Giuffre', Giovanni, 10138 Torino (IT)
(74) Representative: Jorio, Paolo

(57) **Abstract**

A discharge device (11) for actively discharging a main capacitor (C_{filter}) in an electric power system (1) of an electric drive vehicle; a discharge branch (13) is connected in parallel to the main capacitor (C_{filter}) and is provided with a discharge transistor (TD); a control device (14) is connected to the gate/base terminal of the discharge transistor (TD) and controls the discharge transistor (TD) by biasing it to conduction mode when discharging the main capacitor (C_{filter}) is required; and a control unit (12) which activates, when discharging the main capacitor (C_{filter}) is required, an electronic DC/DC converter (3) which supplies a low voltage storage system (7) and an electronic power converter (3) which controls the electric machine (2) to circulate an electric current through the electric machine (2), which current does not cause the generation or absorption of drive torque.

## Description

### TECHNICAL FIELD

The present invention relates to a discharge device and a discharge method to actively discharge a capacitor in an electric power system of an electric drive vehicle. "Electric drive vehicle" means either a vehicle with electric drive only (i.e. free from other types of mechanical energy sources) or a hybrid vehicle provided with electric drive and thermal drive.

### PRIOR ART

Electric drive combined with traditional thermal drive for making hybrid drive is becoming increasingly more popular in road vehicles.

Electric drive includes using a three-phase (typically synchronous and of the permanent magnet type), reversible rotating electric machine (i.e. capable of working either as electric motor by drawing electricity and generating a mechanical drive torque, or as electric generator, by drawing mechanical energy and generating electricity), which on one side is mechanically connected or connectable to the drive wheels, and on the other side is electrically connected to an electronic power converter which exchanges electricity with a storage system consisting of electrochemical cells working at high voltage (of the order of 400-600 Volt). A filter capacitor is present immediately downstream of the storage system. The filter capacitor is installed in the electronic power converter, is connected in parallel to the terminals of the storage system, has a high capacity and has the function of absorbing/supplying high frequency electricity; in other words, the storage system supplies/absorbs the "average value" of the exchanged electricity, while the filter capacitor supplies/absorbs the pulse variations of the exchanged electricity (this extends the life of the electrochemical cells of the storage system, which rapidly decay when they must exchange impulsive energy).

When needed (e.g. whenever the vehicle is turned off at the end of traveling by means of the starter key, in case of maintenance intervention, or in case of accidents), the storage system is galvanically isolated from the rest of the electric circuit by means of an isolating switch to ensure the disconnection of electricity from the electric circuit; however, the filter capacitor is arranged downstream of the insulating switch of the storage system, and by remaining charged, it maintains the electric system live for a very long time. It is therefore necessary to discharge the filter capacitor whenever the isolating switch of the storage system is opened. How to discharge a capacitor in a passive manner, i.e. by means of a discharge resistor which is permanently connected in parallel to the capacitor, or in an active manner, i.e. by biasing a discharge resistor to conduction mode in order to create a discharge branch in parallel to the capacitor by means of which the capacitor charge is dissipated, is known.

The passive discharge system is highly safe because it always works (at least until mechanical integrity of the system is ensured), but it requires instead a very long time (of the order of several minutes) to take the residual voltage of the capacitor to safe levels and provides a permanent energy dissipation by Joule effect. On the other hand, the active discharge system may rapidly discharge the capacitor (in a few seconds) and only dissipates energy when it is used (therefore it has an absolutely negligible energy dissipation), but on the other hand it may not be activated in case of malfunction of the control system which must activate the discharge transistor.

### DESCRIPTION OF THE INVENTION

It is the object of the present invention to provide a discharge device and discharge method to actively discharge a capacitor used in an electric power system of an electric drive vehicle, which discharge method and device are free from the above-described drawbacks while being easy and cost-effective to be implemented.

A discharge device and method for actively discharging a capacitor in an electric power system of an electric drive vehicle are provided as claimed in the appended claims.

### BRIEF DESCRIPTION OF THE DRAWINGS

The present invention will now be described with reference to the accompanying drawings, which show a non-limitative embodiment thereof, in which:
- figure 1 is a diagrammatic view of an electric power system of an electric drive vehicle provided with a capacitor discharge device made according to the present invention;
- figure 2 is an approximate electric scheme of the discharge device in figure 1;
- figure 3 is a detailed electric scheme of the discharge device in figure 1; and
- figure 4 contains charts showing the time evolution of some magnitudes of the discharge device in figure 1 when activating the capacitor discharge.

### PREFERRED EMBODIMENTS OF THE INVENTION

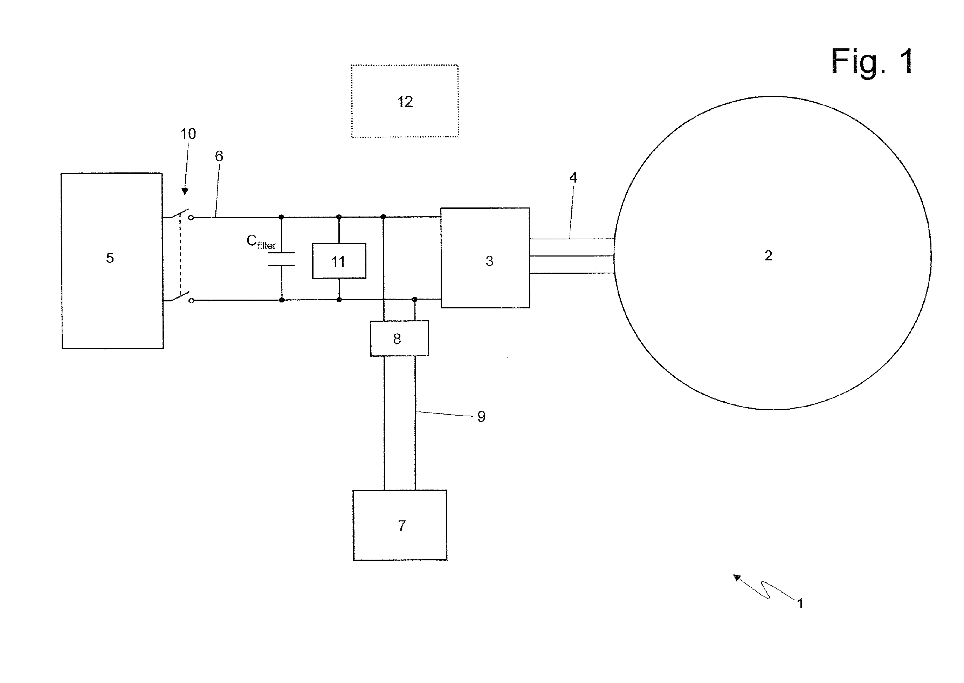

In figure 1, numeral 1 indicates as a whole an electric power system of a hybrid thermal/electric drive vehicle.

The electric power system 1 comprises a three-phase (typically synchronous and of the permanent magnet type), reversible electrical machine 2 (i.e. which may work either as electric motor by drawing electricity and generating mechanical drive torque, or as electric generator by drawing mechanical energy and generating electricity) which is mechanically connected or connectable to the drive wheels of the vehicle.

The electric power system 1 comprises an electronic power converter 3, which is electrically connected to the electric machine 2 by means of three cables 4 and controls the electric machine 2, and a high voltage storage system 5 (typically 400-600 Volt), which is adapted to store electricity, consists of a pack of lithium batteries (provided with respective electrochemical cells), and is electrically connected to the electronic power converter 3 by means of a pair of cables 6. The high voltage storage system 5 has the function of storing/releasing large amounts of energy which are exchanged with the electric machine 2 when electrically driving the vehicle.

The electric power system 1 comprises a low voltage storage system 7 (typically 12 Volt), which is adapted to store electricity and generally consists of a single lead battery. The low voltage storage system 7 is intended to store a small amount of electricity, which is used to supply the auxiliary services of the vehicle working at low voltage. The electric power system 1 comprises an electronic DC/DC converter 8 which is connected to the low voltage storage system 7 by means of a pair of cables 9 to supply energy, when needed, to the low voltage storage system 7 thus keeping it charged over time; in other words, the electronic DC/DC converter 8 takes high voltage electricity from the high voltage storage system 5 and transfers low voltage electricity to the low voltage system 7. The electronic DC/DC converter 8 could also be of the two-way type to transfer or take electricity to/from the low voltage storage system 7.

The high voltage storage system 5 is provided with an isolating switch 10 which, when necessary (e.g. in case of maintenance intervention or in case of accidents), is automatically opened to galvanically separate the high voltage storage system 5 from the rest of the electric system 1.

The electric power system 1 comprises a filter capacitor C_{filter} which is connected in parallel to the terminals of the high voltage storage system 5 immediately downstream of the isolating switch 10 (i.e. is interposed between the high voltage storage system 5 and all the other electric apparatuses), has a high capacitance, and has the function of absorbing/supplying high frequency electricity. In other words, the high voltage storage system 5 supplies/absorbs the "average value" of the exchanged electricity, while the filter capacitor C_{filter} supplies/absorbs the pulse variations of the exchanged electricity (thereby the life of the electrochemical cells of the high voltage storage system 5, which rapidly decay when they must exchange impulsive energy, is extended).

The electric power system 1 comprises a discharge device 11, which is arranged close to the filter capacitor C_{filter}, is connected in parallel to the filter capacitor C_{filter}, and has the function of discharging the filter capacitor C_{filter} (i.e. of rapidly lowering the residual voltage of the filter capacitor C_{filter} to non-dangerous values, typically lower than 50-60 Volt) whenever the isolating switch 10 of the high voltage storage system 5 is opened.

Finally, the electric power system 1 comprises a control unit 12 (typically provided with a microprocessor) which supervises the operation of the whole electric power system 1 and, inter alia, controls the isolating switch 10 of the high voltage storage system 5 to open the isolating switch 10 itself when necessary, and accordingly controls the discharge device 11 to discharge the filter capacitor C_{filter} whenever the isolating switch 10 is opened.

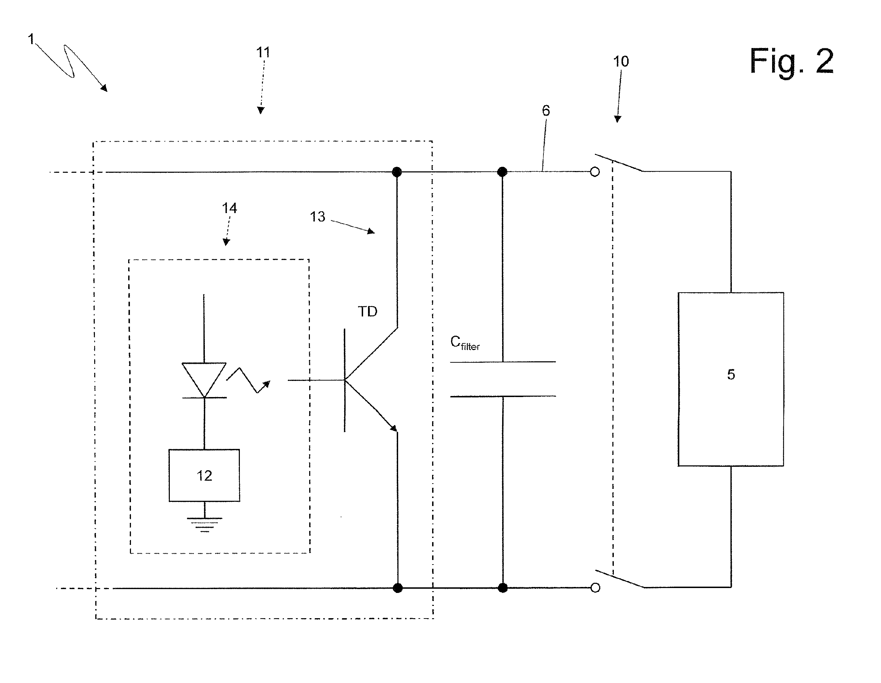

As shown in figure 2, the discharge device 11 comprises a discharge branch 13 which is connected in parallel to the filter capacitor C_{filter} and is provided with a discharge transistor TD which is biased to conduction mode when discharging the filter capacitor C_{filter} is required; in other words, the discharge transistor TD is arranged in series along the discharge branch 13 and thus works as a switch which opens and closes the discharge branch 13: when the discharge transistor TD is biased to conduction mode there is electric continuity along the discharge branch 13 and therefore the energy contained in the filter capacitor C_{filter} may be dissipated through the discharge branch 13; when instead the discharge transistor TD is isolated, there is no electric continuity along the discharge branch 13 and thus the energy contained in the filter capacitor C_{filter} cannot be dissipated through the discharge branch 13. A dissipation resistor Rₑ which is arranged in series to the discharge transistor TD is also present in the discharge branch 13 (in particular, it is connected between the emitter of the discharge transistor TD and the electric ground of the high voltage circuit); the energy of the filter capacitor C_{filter} can be dissipated mainly on the discharge transistor TD, or mainly on the dissipation resistor Rₑ, or on both in any proportion by varying the size of the components.

The discharge device 11 comprises a control device 14 which is connected to the gate/base terminal of the discharge transistor TD and controls the discharge transistor TD by biasing the discharge transistor TD to conduction mode when discharging the filter capacitor C_{filter} is required. In other words, the control device 14 normally connects the gate/base terminal of the discharge transistor TD to the electric ground of the high voltage circuit to maintain the discharge transistor TD isolated (and thus to maintain the discharge branch 13 open), and the control device 14 connects the gate/base terminal of the discharge transistor TD at a supply voltage (preferably a positive terminal of the filter capacitor C_{filter}) to bias the transistor TD to conduction mode and thus close the discharge branch 13 when discharging the filter capacitor C_{filter} is required.

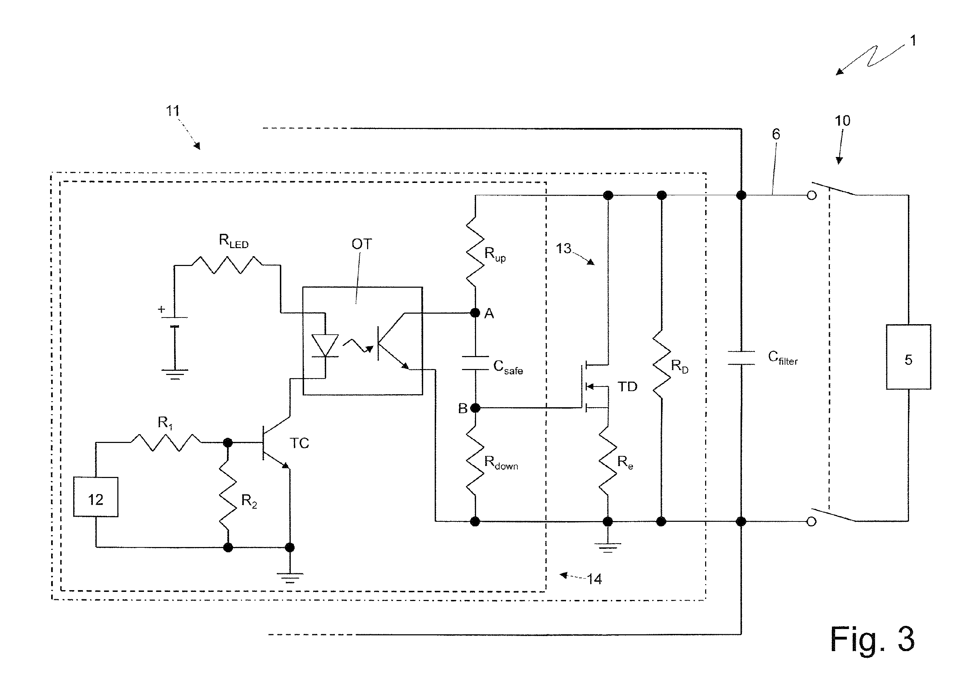

As shown in figure 3, the control device 14 comprises a control transistor TC, which is controlled by the control unit 12 and must be isolated (i.e. it must be "off" or in a non-conductive state) to allow the discharge transistor TD to conduct. In other words, the control transistor TC is connected to the gate/base terminal of the discharge transistor TD so that the discharge transistor TD is biased to conduction mode only when the control transistor TC is isolated. In particular, an output of the control unit 12 is connected to the gate/base terminal of the control transistor TC by means of a voltage divider consisting of two connecting resistors R₁ and R₂; thereby, the control transistor TC is controlled by the control unit 12, which normally maintains the control transistor TC in a conducting state and biases the control transistor TC from the conducting state to the isolated state when discharging the filter capacitor C_{filter} is required.

According to a preferred embodiment, a phototransistor OT, which ensures the galvanic insulation between the low voltage branch (typically 5 Volt), in which the control unit 12 and the control transistor TC are located, and the high voltage branch, in which the discharge transistor TD and the filter capacitor C_{filter} are located, is interposed between the control transistor TC and the discharge transistor TD. In other words, the control device 14 comprises a phototransistor OT, which is connected between the discharge transistor TD and the control transistor TC to provide a galvanic insulation. A control photodiode of the phototransistor OT is connected in series to the control transistor TC, and in particular an anode of the control photodiode is connected to a supply voltage by means of a polarization resistor R_{LED}, while a cathode of the control photodiode is connected to a collector of the control transistor TC (the emitter of the control transistor TC is connected to the electric ground of the low voltage circuit and is galvanically isolated from the electric ground of the high voltage circuit).

The gate/base terminal of the discharge transistor TD is connected to the positive terminal of the filter capacitor C_{filter} by means of a connecting resistor Rᵤₚ and is connected to the electric ground of the high voltage circuit by means of a connecting resistor R_{down}; the two connecting resistors Rᵤₚ and R_{down} define a voltage divider, which applies a fraction of the overall voltage of the filter condenser C_{filter} to the gate/base terminal of the discharge transistor TD.

The control device 14 (i.e. the phototransistor OT) connects the gate/base terminal of the discharge transistor TD to the electric ground of the high voltage circuit when the control transistor TC is biased to conduction mode; thereby, when the control transistor TC is biased to conduction mode, the gate/base terminal of the discharge transistor TD is equipotential with the electric ground of the high voltage circuit, and thus the discharge transistor TD is mandatorily isolated.

According to a preferred embodiment, the control unit 14 comprises a safety capacitor C_{safe} which is interposed between the gate/base terminal of the discharge transistor TD and the positive terminal of the filter capacitor C_{filter}; in particular, the safety capacitor C_{safe} is connected in series to the connecting resistor Rᵤₚ and is arranged downstream of the connecting resistor Rᵤₚ with respect to the gate/base terminal of the discharge transistor TD. Furthermore, the safety capacitor C_{safe} is also interposed between the gate/base terminal of the discharge transistor TD and the control device 14 (i.e. the phototransistor OT). In brief, the emitter of the phototransistor OT is directly connected to the electric ground of the high voltage circuit, while the collector of the phototransistor OT is connected to a point A arranged between the connecting resistor Rᵤₚ and the safety capacitor C_{safe} (i.e. a first terminal of the control device 14 is connected between the connecting resistor Rᵤₚ and the safety capacitor C_{safe}, and a second terminal of the control device 14 is connected to the electric ground of the high voltage circuit); moreover, the gate/base terminal of the discharge transistor TD is directly connected to a point B arranged between the safety capacitor C_{safe} and the connecting resistor R_{down}.

As explained in greater detail below, the safety capacitor C_{safe} is charged when the discharge transistor TD is in the conductive state, thus determining a progressive reduction of the voltage/current at the gate/base terminal of the discharge transistor TD until the discharge transistor TD is taken to the isolated state after a certain period of time from the starting instant of charging the safety capacitor C_{safe} (i.e. from the starting instant of the conduction of the discharge transistor TD).

According to a preferred embodiment, the discharge device 11 also comprises a discharge resistor R_{D} which is permanently connected in parallel to the filter capacitor C_{filter} to determine a passive discharge of the filter capacitor C_{filter}. The function of the discharge resistor R_{D} is essentially of (extreme) emergency, i.e. the discharge resistor R_{D} allows to discharge (very slowly) the filter capacitor C_{filter} also when the discharge device 11 is completely out of order.

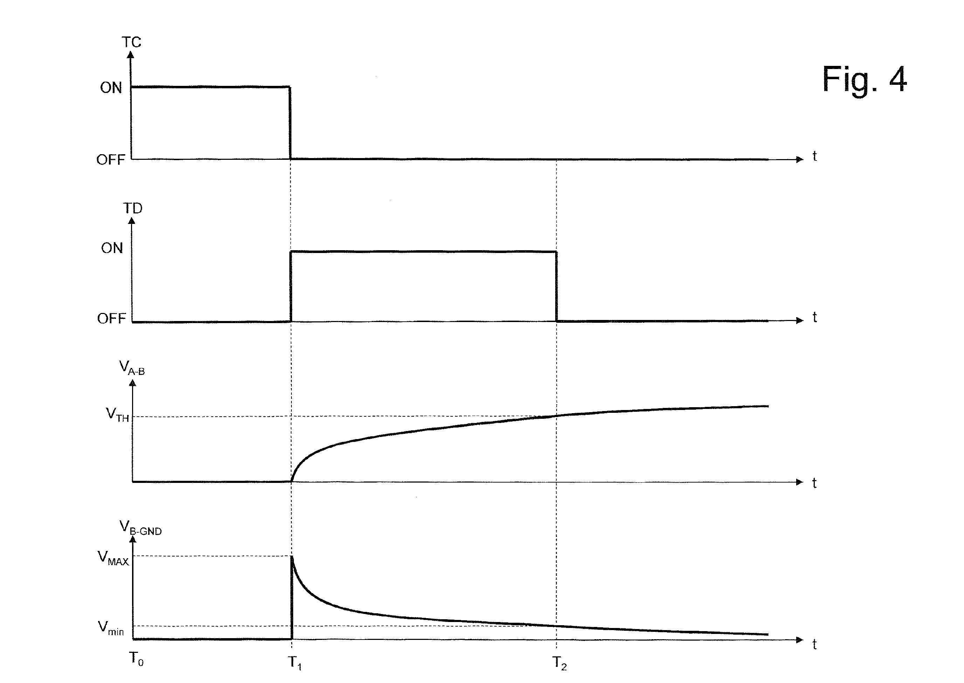

The operation of the discharge device 11 is described below with reference to figure 3 and to the time charts in figure 4.

In normal operating conditions (including, in figure 4, between time instant To and time instant T₁), the control transistor TC is in the conductive state ("ON"), thus an electric current flows through the control photodiode of the phototransistor OT (which is connected in series to the control transistor TC), and therefore the phototransistor OT is in the conductive state as well; as the phototransistor OT is in the conductive state, point A is connected to the electric ground of the high voltage circuit (through the phototransistor OT in the conductive state), thus the voltage V_{A-B} at the terminals of the safety capacitor C_{safe} is zero (as point A is connected to the electric ground of the high voltage circuit), and the voltage V_{B-GND} of the gate/base terminal of the discharge transistor TD is also zero (as point A is connected to the electric ground of the high voltage circuit). When the voltage V_{B-GND} of the gate/base terminal of the discharge transistor TD is zero, the discharge transistor TD is necessarily isolated ("OFF") and thus the discharge branch 13 is open.

The isolating switch 10 is opened just before time instant T₁ and therefore rapidly discharging the filter capacitor C_{filter} is required; accordingly, in time instant T₁, the control unit 12 cancels the signal from the gate/base terminal of the control transistor TC thus biasing the control transistor TC itself to non-conductive state ("OFF"); in time instant T₁, the current across the control photodiode of the phototransistor OT is cancelled (due to the opening of the control transistor TC) and the phototransistor OT stops conducting, therefore point A is isolated from the electric ground of the high voltage circuit. In time instant T₁, point A is isolated from the electric ground of the high voltage circuit and thus point B (i.e. the gate/base terminal of the discharge transistor TD) is at a maximum voltage V_{MAX} (the value of which depends on the reduction radio of the voltage divider formed by the two connection resistors Rᵤₚ and R_{down}), while the safety capacitor C_{safe} starts charging (i.e. the voltage V_{A-B} at the terminals of the safety capacitor C_{safe} starts rising).

Due to the progressive charging of the safety capacitor C_{safe}, the voltage V_{A-B} at the terminals of the safety capacitor C_{safe} exponentially increases, and the voltage V_{B-GND} at the gate/base terminal of the discharge transistor TD decreases in a complementary manner. Between time instant T₁ and time instant T₂, the voltage V_{B-GND} at the gate/base terminal of the transistor TD decreases progressively and exponentially between the maximum voltage V_{MAX} and a minimum voltage Vₘᵢₙ which are however sufficient to maintain the discharge transistor TD in the conductive state; after time instant T₂, the voltage V_{B-GND} at the gate/base terminal of the discharge transistor TD drops under the minimum voltage Vₘᵢₙ and thus the discharge transistor TD stops conducting and returns to the isolated condition ("OFF"). In other words, in time instant T₂, the voltage V_{A-B} at the terminals of the safety capacitor C_{safe} reaches a threshold voltage V_{TH} such that the voltage V_{B-GND} at the gate/base terminal of the discharge transistor TD is equal to the minimum voltage Vₘᵢₙ under which the discharge transistor TD stops conducting and returns to the isolated condition ("OFF").

The safety capacitor C_{safe} serves the function of a "timer" which "automatically" turns off the discharge transistor TD after a given interval of time (of the order of a few seconds) from activation of the discharge transistor TD itself; i.e. once the discharge transistor TD is biased to conduction mode, it keeps conducting for a given time interval, at the end of which the effect of the safety capacitor C_{safe} determines an "automatic" switch-off of the discharge transistor TD. This function of the safety capacitor C_{safe} is very important because it allows to protect the discharge branch 13 (and in particular the discharge transistor TD) from overheating when the discharge transistor TD is activated without the isolating switch 10 having been opened. In other words, a fault could bias the discharge transistor TD to conduction mode without the isolating switch 10 being opened: in this case, all the energy of the high voltage storage system 5, which is very much higher than the energy stored in the filter capacitor C_{filter}, would be discharged into the discharge branch 13, and would thus rapidly determine the melting of the discharge transistor TD and/or of the dissipation resistor Rₑ. Instead, by virtue of the action of the safety capacitor C_{safe}, the discharge transistor TD opens in all cases after a given time interval, and it thus prevents energy higher than the actual dissipation capacities from being dissipated in the discharge branch 13.

According to a preferred embodiment, when discharging the filter capacitor C_{filter} is required, the active control unit 12 activates the electronic DC/DC converter 8 which is connected in parallel to the filter capacitor C_{filter} and supplies the low voltage storage system 7 to transfer the energy from the filter capacitor C_{filter} to the low voltage storage system 7. Furthermore, when discharging the filter capacitor C_{filter} is required, the control unit 12 activates the electronic power converter 3 which is connected in parallel to the filter capacitor C_{filter} and controls the electric machine 2 to allow a current circulate through the electric machine 2, which does not determine generation or absorption of drive torque (but obviously determines a certain power dissipation by Joule effect in the windings of the electric machine 2 and inside the electronic power converter 3). The energy which is absorbed by the electronic DC/DC converter 8 and by the electronic power converter 3, working in parallel (i.e. in addition) to the discharge branch 13, allows to substantially accelerate the discharge of the filter capacitor C_{filter}; thereby, the filter capacitor C_{filter} can be discharged (i.e. the voltage at the terminals of the filter capacitor C_{filter} can be lowered to non-dangerous values) very rapidly (in less than one second) despite using a relatively small discharge transistor TD (i.e. not provided with a high heat dissipation capacity). In other words, the intervention of the electronic DC/DC converter 8 and of the electronic power converter 3 helps to discharge the filter condenser C_{filter}, and therefore a less performing discharge transistor TD (thus smaller and less costly) can be used, while maintaining a very low discharge time of the filter capacitor C_{filter}.

It is worth noting that the discharge device 11 is very safe per se, because no control activation is required (i.e. turning on the control transistor TC) in order to activate the discharge of the filter capacitor C_{filter}, but cancellation of a control is required instead (i.e. turning off the control transistor TC): thus, in the case of fault of the control unit 12 (e.g. when the microprocessor of the control unit 12 is reset in case of mechanical failure in the connection between the control unit 12 and the control transistor TC, or in case of interruption of the power voltage of the control transistor TC), the discharge transistor TD automatically closes (i.e. is automatically biased to conduction mode), thus allowing to discharge the filter capacitor C_{filter}. Obviously, if case of fault, the intervention of the electronic DC/DC converter 8 and of the electronic power converter 3 is not realistic in order to help (speed up) the discharge of the filter capacitor C_{filter}, but the only consequence is a loss of efficiency (i.e. the discharge of the filter capacitor C_{filter} takes longer) and not a loss of effectiveness (i.e. the filter capacitor C_{filter} is however discharged albeit over a longer time, i.e. of the order of a few seconds instead of less than one second).

The basic idea was to provide a control device 14 with "reverse" operation: indeed, the discharge of the filter capacitor C_{filter} is not generated following an activation control, but on the contrary, the discharge of the filter capacitor C_{filter} is constantly deactivated by generating a deactivation control; when such a deactivation control ceases (due to a choice by the control unit 12 or following a fault), the discharge of the filter capacitor C_{filter} is automatically activated. Moreover, the energy needed to maintain the discharge transistor TD in the conduction mode comes directly from the filter capacitor C_{filter}, and therefore once the discharge has been trigged by means of the discharge branch 13, the discharge itself is "self-sustained" until the residual voltage at the terminals of the filter capacitor C_{filter} drops to very low (i.e. not dangerous) values.

By activating the control transistor TC for a short time, the control unit 12 can repeat the discharge sequence (between time instants To and T₂) for an unlimited number of times, if the discharge of the filter capacitor C_{filter} is not (completely) effective "the first time round"; in other words, the control unit 12 is capable of carrying out a series of discharge sequences (called "multiple active discharge") to discharge the filter capacitor C_{filter} in several steps. For example, the "multiple active discharge" may be used when the isolating switch 10 is jammed in a closed configuration, has an intermittent operation, or opens with an anomalous delay (of the order of few seconds). The "multiple active discharge" allows to ensure the attempt to discharge the filter capacitor C_{filter} over time, even in case of malfunctions (e.g. in case of malfunction of the insulating switch 10), while avoiding failures caused by overheating in the discharge branch 13.

By way of example, in the above description, reference was made to a bipolar junction transistor (BJT) having collector, gate/base terminal and emitter; in a perfectly equivalent embodiment, a field effect transistor (typically with MOSFET technology) having drain, gate and source can be obviously used.

The above-described discharge device 11 has many advantages.

Firstly, the above-described discharge device 11 is simple and cost-effective to be implemented because it consists of a few elements which are easily available and cost-effective.

Furthermore, the above-described discharge device 11 ensures the possibility of ("automatically") activating the discharge of the filter capacitor C_{filter} even in the presence of faults in the control unit 12 (e.g. due to lack of supply voltage or microcontroller reset), in the presence of faults in the electric system 1 (e.g. detachment of a connector or breakage of a fuse), and even in case of total disconnection of the low voltage storage system 7, in which condition all the electronic control units on the vehicle cease working and are switched off. Thereby, the discharge device 11 greatly simplifies formal safety analyses required in automotive applications, because a "reverse" analysis method can be carried out instead of analyzing the reaction of the discharge device 11 in the presence of all possible faults: that is, the discharge which is automatically generated in the presence of faults, is deactivated as long as the discharge device 11 is intact. In other words, the discharge device 11 is very robust even in case of multiple faults.

Finally, the discharge device 11 has an "intrinsic" thermal protection (i.e. not bound to the intervention of external elements, but directly determined by the passive components, and in particular by the safety capacitor C_{safe}) because the amount of electricity which may be dissipated in the discharge branch 13 at each single activation of the discharge branch 13 itself is automatically limited.

## Claims

1. A discharge device (11) for the active discharge of a main capacitor (C_{filter}) in the electric power system (1) of an electric drive vehicle; the discharge device (11) comprises:
a discharge branch (13) of the circuit, which is connected in parallel to the main capacitor (C_{filter}) and which comprises a discharge transistor (TD) that shall be biased to conduction mode when it is required to discharge the main capacitor (C_{filter}); and
a control device (14) that is connected to the gate/base terminal of the discharge transistor (TD) and that commands the discharge transistor (TD) biasing it to conduction mode when it is required to discharge the main capacitor (C_{filter});
the discharge device (11) is **characterized in that** it comprises a control unit (12) that activates, when it is required to discharge the main capacitor (C_{filter}), an electronic high voltage power converter (3) that is connected in parallel to the main capacitor (C_{filter}) and that drives an electric machine so as to circulate through the electric machine an electric current that does not cause generation or absorption of torque.

2. A discharge device (11) as claimed in claim 1, wherein the control unit (12) activates, when it is required to discharge the main capacitor (C_{filter}), an electronic DC/DC converter (8) that is connected in parallel to the main capacitor (C_{filter}) and that provides power to a low voltage energy storage system, so as to transfer energy from the main capacitor (C_{filter}) to the low voltage energy storage system; and

3. A discharge device (11) as claimed in claim 1 or 2 and that comprises a discharging resistor (R_{D}) that is permanently connected in parallel to the main capacitor (C_{filter}).

4. A discharge method for the active discharge of a main capacitor (C_{filter}) in the electric power system (1) of an electric drive vehicle;
the method comprises the step of biasing, when it is required to discharge the main capacitor (C_{filter}), a discharge transistor (TD) to conduction mode, in order to create a discharge branch (13) in the circuit, through which the energy accumulated in the main capacitor (C_{filter}) is discharged;
the discharge method is **characterized in that** it comprises the further step of activating, when it is required to discharge the main capacitor (C_{filter}), an electronic high voltage power converter (3) that is connected in parallel to the main capacitor (C_{filter}) and that drives an electric machine so as to circulate through the electric machine an electric current that does not cause generation or absorption of torque.

5. A Method as claimed in claim 4 and comprising the further step of activating, when it is required to discharge the main capacitor (C_{filter}), an electronic DC/DC converter (8) that is connected in parallel to the main capacitor (C_{filter}) and that provides power to a low voltage energy storage system (7), so as to transfer energy from the main capacitor (C_{filter}) to the low voltage energy storage system (7).
